# EUROPEAN PATENT SPECIFICATION

(11) **EP 0 391 661 B1**
(45) Date of publication and mention of the grant of the patent: **27.09.1995**
(21) Application number: 90303555.8
(22) Date of filing: 03.04.1990
(51) Int. Cl.: B32B 3/24, B32B 27/12, B32B 5/32, B32B 7/14

(54) **Permeable sheet material**
Durchlässiges Material
Feuille perméable

(30) Priority: 05.04.1989 GB 8907667
(43) Date of publication of application: 10.10.1990
(73) Proprietor: DON & LOW NONWOVENS LIMITED, Forfar, Angus, DD8 1EY (GB)
(72) Inventor: Woodbridge, T.J., London W3 6PX (GB)
(74) Representative: Jones, Andrée Zena

(56) References cited:
- EP-A- 0 238 014
- US-A- 4 433 024
- Kirk-Othmer, Encyclopedia of Chemical Technology, Third Edition, Volume 15, 1981, Page 105

## Description

The invention concerns improvements in layered sheet material, which is permeable to air but which is generally impervious to particles and liquids, and is particularly although not exclusively suitable as a material for industrial use and from which work clothing can be made.

It is a general requirement of many industries and medicine to provide clothing, especially disposable clothing, which protects the wearer against undesirable particles or liquids, or work carried out in a clean room, for example, becoming contaminated with undesirable particles from the worker, while at the same time remaining permeable to air, i.e. "breathable", in order to be comfortable to wear. Examples of such applications include paint spraying, mining, removal of asbestos or other harmful particulate materials, electronics, chemical industries, surgery.

In addition, for many of these applications the material used for making such clothing must often fulfil various further requirements. For instance, where vulnerable electronic components or inflammable gases are involved, as in paint spraying or some chemical applications, the material must have antistatic properties or be treatable to this end. For applications where cleanliness is important, as in surgery, paint spraying or electronics, the material should not itself produce any contamination by linting.

Various materials are known which fulfil some of these requirements, in particular spun-bonded olefin material such as "Tyvek" (trade mark) and spun-bonded and thermal-bonded polypropylenes, but none satisfies all the requirements of a material for work clothing. For instance, "Tyvek" has antistatic properties, is impervious to liquid and particles and is largely non-linting, but displays only limited air permeability and is therefore uncomfortable to wear. Polypropylene films can be made which are breathable and can be liquid- and particle-proof, depending on their manufacture, but are prone to linting and tend to lose any liquid-barrier properties when anti-static treated.

The invention provides in one of its aspects, a layered sheet material formed of first and second layers, the first layer comprising a sheet of non-linting, homogenous impermeable polypropylene material having provided therein at a predetermined density/metre² micropores of a size in the range 0.1 to 0.4 mm to provide said layer with a controlled degree of porosity whereby the layer is permeable to air through said pores, and the second layer being comprised of spun-bonded and/or melt-blown polypropylene fibres and being by its fibrous construction air-permeable and substantially impervious to liquids and particles, the two layers being joined to form a laminated construction by bonding at a plurality of localised points or regions in a pattern, said pattern extending over at least substantially the entire area of the layered sheet material, and arranged to provide areas or interstices where no bond is present.

Preferably, the first layer, which would advantageously constitute the outer layer for clothing, is a microperforated polypropylene film of continuous polymer or possibly of fibrous composition compressed to a smooth homogenous layer, or a blend of such constituents, pierced by a large number of microperforations so as to make it breathable; and liquids or particles which might otherwise pass through the perforations are stopped by the impervious second, or inner layer. Liquids are normally prevented from breaking through the microperforated film because of the surface tension across the hole diameter. A further liquid barrier is provided by the effect of surface tension across the fibre spacings of the other layer.

The second, or inner, layer is composed of a fibre substrate of polypropylene fibres, which layer provides strength to the combination of layers and is easily bondable to the outer layer. The substrate is a spun-bonded and/or melt-blown fibre material.

Sheet material formed of two layers according to the invention may combine the advantages and obviate the disadvantages of the two layers individually and be thus suited to provide comfortable and effective industrial clothing. The outer layer prevents any lint from the fibrous inner layer reaching the outside of the garment and further can be treated against static electricity without affecting the liquid-barrier property of the inner layer. The inner layer provides strength to the sheet and captures any liquids or particles passing through the outer layer.

Because the two layers are not bonded completely, i.e. not continuously over their whole area but only at a plurality of spaced, localised points or small regions distributed uniformly or randomly over the extent of the layers, the lamination is still breathable through those microperforations which do not coincide with bonding points. This is not the case with standard bonding methods which involve an entire, co-extensive or overall lamination of adhesive or heat bonding. The localised bonding of the purposes of the invention may be effected by pressing the layers between embossing points on a thermo-bonding roller or by any other suitable method. Conceivably the two layers could be glued together by local application of adhesive to give the required effect; for example, a hot melt glue system by which it is possible to apply a localised glue pattern.

For a better understanding of the invention, embodiments of it will now be described, by way of example, with reference to the accompanying figure, which shows a two-layer sheet in accordance with the invention.

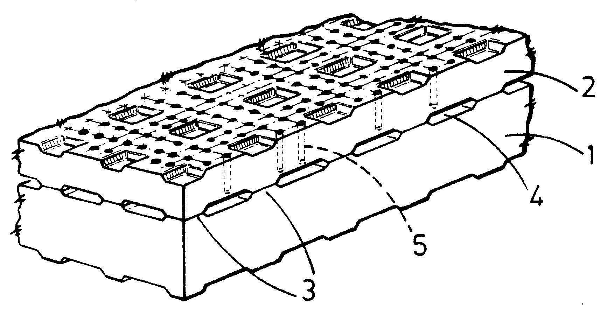

In Figure 1, which is not to scale, a substrate 1, of polypropylene fibre, is bonded to a homogenous film 2, likewise of polypropylene by a mesh-shaped pattern of points or very small regions of bonding 3. The bonding between film 2 and substrate 1 thus does not extend in an unbroken, co-extensive area over the entire extent of the sheet formed by the two bonded layers but leaves free spaces of interstices 4.

Prior to bonding, the film 2 is penetrated mechanically to form a predetermined number of microperforations 5 allowing air to permeate in a controlled manner through the otherwise continuous impermeable film 2. The film may be white, transparent or coloured, and has a gloss finish.

Although some of these perforations 5 may be blocked by the bonding process at bonding points 3, those coinciding with the free spaces 4 remain open so that the sheet as a whole is air-permeable since the substrate 1, although not itself perforate, is air-permeable through its fibrous structure by virtue of its composition.

The bonding is preferably made by passing the two layers between embossed rollers and thermally bonding them together over the mesh-shaped pattern 3, though sonic or other point- or localised bonding methods can be used.

The substrate 1 is fibrous and is usually a compacted non-woven sheet. The substrate gives mechanical strength to the sheet, so that the strength-to-weight ratio of the sheet can be higher than that of a comparable sheet made of a single material, and is itself impervious to particles and liquids, so that any such which are allowed through the perforations 5 in the film layer 2 cannot penetrate the substrate 1, and likewise no particles from the inside can escape through the sheet. The substrate is of a random non-woven construction as produced by melt-blowing and/or spin-bonding techniques.

The film 2 and/or the substrate 1 can be anti-static treated separately on one or both sides, before bonding, in a known manner without affecting the barrier properties, and the sheet comprising the bonded layers can be sterilised for surgical purposes. The sheet in accordance with the invention is therefore capable of meeting many more of the requirements for work clothing than single-layer material such as has been used previously.

The size and spacing of the bonding points or regions can be varied as required: increasing their size or decreasing their spacing improves the bonding of the two layers to each other but, because more of the pores are occluded by the process, decreases the air-permeability of the finished product. Decreasing the bonding point size or increasing the spacing has the converse effect. Typically the pore spacing will be of the order of 1 mm. The pore size of the microperforations is 0.1-0.4 mm so as to give a hole coverage of roughly 2 to 10%. Reducing the hole coverage may not directly enhance the barrier effect, according to tests, so that a 10% hole coverage giving adequate breathability may also be acceptable as a liquid and particle barrier.

The bonding point dimensions will be about 0.5-1.0 mm with a spacing of perhaps 1-2 mm and the bonded area might be around 20% of the total, e.g. using a bonding roller with a 20% embossed area. The pores and/or the bonding regions may be randomly arranged or in a regular array, such as the rectangular array shown in the Figure. If both are in similar arrays the arrays may be arranged coherently so that the bonding points consistently do not overlap the pores.

Although the material of the invention is particularly suitable for making clothing and to this end can be processed in the normal way, no special methods being necessary, other applications are envisaged. For instance, the material could be used in filters or to make covers for machines where air circulation is necessary but contamination is to be prevented.

The dimensions of the pores and the fibres of the substrate can vary depending on the use to which the material is to be put. For instance, in electronic environments the particle sizes to be excluded would be of the order of a micron and the fibre substrate would have to be constructed accordingly. Similar considerations would apply for surgical uses. On the other hand, for use in mining for example the fabric could be much coarser.

## Claims

1. A layered sheet material formed of first (2) and second (1) layers, the first layer (2) comprising a sheet of non-linting, homogenous impermeable polypropylene material having provided therein at a predetermined density/metre²micropores (5) of a size in the range 0.1 to 0.4 mm to provide said layer (2) with a controlled degree of porosity whereby the layer (2) is permeable to air through said pores, the second layer (1) being comprised of spun-bonded and/or melt-blown polypropylene fibres and being by its fibrous construction air-permeable and substantially impervious to liquids and particles, the two layers being joined to form a laminated construction by bonding at a plurality of localised points or regions (3) in a pattern, said pattern extending over at least substantially the entire area of the layered sheet material, and arranged to provide areas or interstices (4) where no bond is present.

2. Layered sheet material as claimed in claim 1 wherein the layers of the material are bonded by heat and pressure in a thermo-bonding technique applied in said pattern.

3. Layered sheet material as claimed in either one of claims 1 to 2, wherein the layers of the material are bonded by adhesive material applied in said pattern.

4. Layered sheet material as claimed in any one of the preceding claims wherein said micropores (5) of the first layer (2) are formed with a diameter selected from said size range according to the surface tension of said liquids.

## Patentansprüche

1. Folien-Schichtmaterial, das aus einer ersten (2) und einer zweiten (1) Schicht gebildet wird, wobei die erste Schicht (2) eine Folie aus nicht faserndem, homogenen, undurchlässigen Polypropylen-Material umfaßt, in der in einer festgelegten Dichte/m² Mikroporen (5) mit einer Größe im Bereich von 0,1 bis 0,4 mm vorhanden sind, um dieser Schicht (2) ein kontrolliertes Maß an Porösität zu geben, wodurch die Schicht (2) mittels dieser Poren durchlässig für Luft ist, wobei die zweite Schicht (1) im Schmelzspinnverfahren hergestellte und/oder blasgeformte Polypropylen-Fasern aufweist und auf Grund ihres Faseraufbaus luftdurchlässig und im wesentlichen undurchlässig für Flüssigkeiten und Teilchen ist, wobei die beiden Schichten durch Verbinden an einer Vielzahl von lokalisierten Punkten oder Bereichen (3) in einem Muster verbunden werden, um eine Schichtstruktur zu bilden, wobei sich dieses Muster über wenigstens im wesentlichen die gesamte Fläche des Folien-Schichtmaterials erstreckt und so angeordnet ist, daß Räume oder Zwischenräume (4) dort gebildet werden, wo keine Verbindung vorhanden ist.

2. Folien-Schichtmaterial nach Anspruch 1, bei dem die Schichten des Materials durch Wärme und Druck in einer Wärmeverbindungstechnik, die in dem Muster angewendet wird, miteinander verbunden werden.

3. Folien-Schichtmaterial nach einem der Ansprüche 1 oder 2, bei dem die Schichten des Materials durch Klebemittel, die in dem Muster angewendet werden, miteinander verbunden werden.

4. Folien-Schichtmaterial nach einem der hervorgehenden Ansprüche, bei dem der Durchmesser der Mikroporen (5) der ersten Schicht (2) eine Größe aufweist, die aus dem Großenbereich, entsprechend der Oberflächenspannung der Flüssigkeiten, ausgewählt wird.

## Revendications

1. Matériau stratifié en feuille formé d'une première (2) et d'une deuxième couche (1), la première couche (2) comprenant une feuille de polypropylène imperméable homogène ne formant pas de peluches, comportant des micropores (5), avec une densité prédéterminée par m² d'une taille comprise entre 0,1 et 0,4 mm, pour conférer à ladite couche (2) un degré contrôlé de porosité, la couche (2) étant ainsi perméable à l'air par l'intermédiaire desdits pores, la deuxième couche (1) étant composée de fibres de polypropylène non tissées et/ou soufflées en fusion, et étant perméable à l'air et pratiquement étanche aux liquides et aux particules par suite de sa structure fibreuse, les deux couches étant assemblées pour former une structure stratifiée par liaison en plusieurs points ou régions localisés (3) dans une configuration, ladite configuration s'étendant sur au moins pratiquement l'ensemble de la surface du matériau stratifié en feuille et étant agencée de sorte à ménager des zones ou des interstices (4) au niveau desquelles il n'y a pas de liaison.

2. Matériau stratifié en feuille selon la revendication 1, dans lequel les couches du matériau sont assemblées par chaleur et pression selon une technique de liaison thermique appliquée à ladite configuration.

3. Matériau stratifié en feuille selon l'une quelconque des revendications 1 à 2, dans lequel les couches du matériau sont assemblées par un matériau adhésif appliqué sur ladite configuration.

4. Matériau stratifié en feuille selon l'une quelconque des revendications précédentes, dans lequel lesdits micropores (5) de la première couche (2) sont formées avec un diamètre choisi dans ledit intervalle de dimensions, en fonction de la tension de surface desdits liquides.
